# EUROPEAN PATENT APPLICATION

(11) **EP 4 524 611 A1**
(43) Date of publication of application: **19.03.2025**
(21) Application number: 24185651.7
(22) Date of filing: 01.07.2024
(51) Int. Cl.: G01S 7/484, G01S 7/4861

(54) **DISTANCE MEASUREMENT DEVICE**

(30) Priority: 12.09.2023 JP 2023147712
(71) Applicant: Kabushiki Kaisha Toshiba, Tokyo 105-0023 (JP)
(72) Inventor: KUBOTA, Hiroshi, Minato-ku, Tokyo, 105-0023 (JP)
(74) Representative: Hoffmann Eitle

(57) **Abstract**

According to one arrangement, a distance measurement device includes an emission unit emitting pulse light; a photodetector detecting reflection light of the pulse light from a target object; an analog processing unit generating light reception data based on the detected reflection light; and a digital processing unit measuring a distance to the target object based on the light reception data. The emission unit is configured to emit first pulse light and second pulse light in this order, the second pulse light having a peak and a pulse width at least one of which is different from that of the first pulse light. The digital processing unit is configured to: add first light reception data corresponding to the first pulse light and second light reception data corresponding to the second pulse light; and measure the distance based on the added data.

## Description

### FIELD

Arrangements described herein relate generally to a distance measurement device.

### BACKGROUND

Distance measurement devices called light detection and ranging (LiDAR) are known. A LiDAR applies a laser beam to a target object, and detects an intensity of reflection light reflected from the target object by a sensor (photodetector). Then, the LiDAR measures a distance from the LiDAR to the target object based on a temporal change of a light intensity signal output from the sensor.

### BRIEF DESCRIPTION OF THE DRAWINGS

FIG. 1 is a block diagram showing an example of a configuration of a distance measurement device according to a first arrangement.
FIG. 2 is a plan view showing an example of a planar layout of a photodetector according to the first arrangement.
FIG. 3 is a block diagram showing an example of a configuration of a pixel according to the first arrangement.
FIG. 4 is a circuit diagram showing an example of the configuration of the pixel according to the first arrangement.
FIG. 5 is a schematic diagram showing an example of a structure of an avalanche photodiode and an operating principle of a SPAD according to the first arrangement.
FIG. 6 is a block diagram showing an example of a configuration of a digital processing unit according to the first arrangement.
FIG. 7 is a flowchart showing an example of a distance measurement operation in the distance measurement device according to the first arrangement.
FIG. 8 is a waveform diagram showing an example of various signals relating to the distance measurement operation in the distance measurement device according to the first arrangement.
FIG. 9 is a block diagram showing an example of a configuration of a composition operation unit according to a second arrangement.
FIG. 10 is a flowchart showing an example of a distance measurement operation in a distance measurement device according to the second arrangement.
FIG. 11 is a waveform diagram showing an example of various signals relating to the distance measurement operation in the distance measurement device according to the second arrangement.

### DETAILED DESCRIPTION

In general, according to one arrangement, a distance measurement device includes an emission unit configured to emit pulse light; a photodetector configured to detect reflection light of the pulse light from a target object; an analog processing unit configured to generate light reception data based on the detected reflection light; and a digital processing unit configured to measure a distance to the target object based on the light reception data. The emission unit is configured to emit first pulse light and second pulse light in this order, the second pulse light having a peak and a pulse width at least one of which is different from that of the first pulse light. The digital processing unit is configured to: add first light reception data corresponding to the first pulse light and second light reception data corresponding to the second pulse light; and measure the distance based on the added data.

Hereinafter, arrangements will be described with reference to the drawings. In the description below, components having the same functions and configurations will be denoted by a common reference symbol. To distinguish a plurality of components having a common reference symbol from each other, an appended symbol is added after the common reference symbol. When a plurality of components are not particularly distinguished from each other, the components are assigned only a common reference numeral or symbol without an accompanying numeral or symbol.

### 1. First Embodiment

A distance measurement device according to a first arrangement will be described. The distance measurement device of the first arrangement is, for example, a LiDAR that measures a distance from a target object using a laser, and includes a photodetector which is a photomultiplier (a semiconductor photon-multiplier, in particular, a silicon photon-multiplier (SiPM)) that can be integrated on a semiconductor substrate.

### 1. 1 Configuration

A configuration of the distance measurement device according to the first arrangement will be described.

### 1. 1. 1 Distance Measurement Device

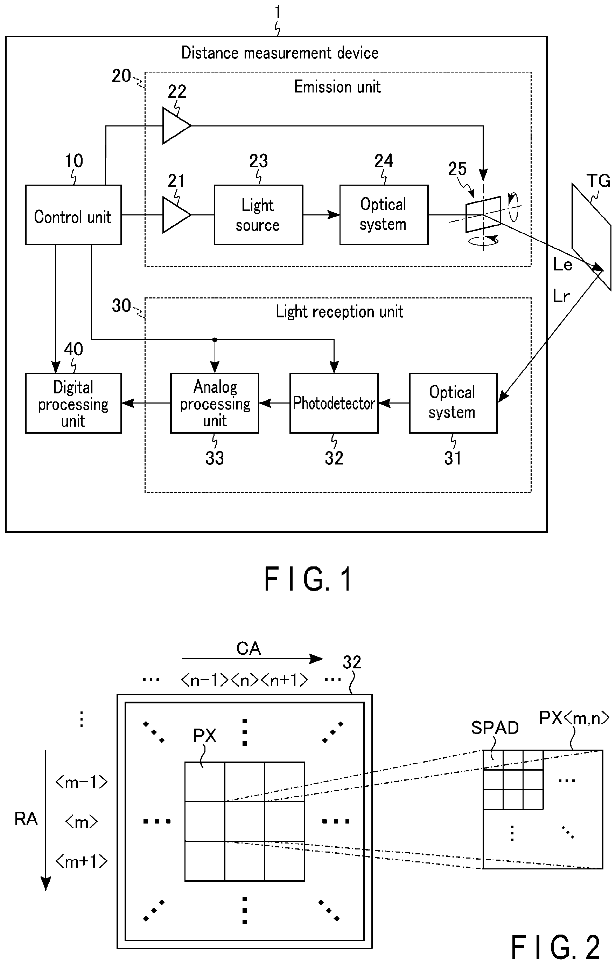

FIG. 1 is a block diagram showing an example of the configuration of the distance measurement device according to the first arrangement.

As shown in FIG. 1, a distance measurement device 1 is configured to measure a distance from a target object TG. The distance measurement device 1 may correspond to a part of a vehicle-mounted system (not shown). The target object TG is a tangible object, such as another vehicle, a pedestrian, an obstacle, or the like that is present in a front, back, or side of the vehicle on which the distance measurement device 1 is mounted.

The distance measurement device 1 includes a control unit 10, an emission unit 20, a light reception unit 30, and a digital processing unit 40.

The control unit 10 includes, for example, a central processing unit (CPU), a read only memory (ROM), a random access memory (RAM), and an oscillator. The ROM stores a program or the like for use in operations of the distance measurement device 1. The CPU controls the emission unit 20, the light reception unit 30, and the digital processing unit 40 in accordance with the program stored in the ROM. The RAM is used as a work area of the CPU. The oscillator is used for generation of an intermittent pulse signal. The oscillator is configured to alternately generate two kinds of pulse signals, each having an amplitude and a pulse width, at least one of which is different from that of the other pulse signal.

The emission unit 20 intermittently generates and emits a laser pulse. The emitted laser pulse is radiated on the target object TG, and is thereby used to measure a distance between the distance measurement device 1 and the target object TG. The laser pulse emitted from the emission unit 20 is hereinafter also called "emission light Le". The emission light Le reflected by the target object TG is also called "reflection light Lr". The emission unit 20 includes drive circuits 21 and 22, a light source 23, an optical system 24, and a mirror 25.

The drive circuit 21 generates an intermittent drive current in accordance with a pulse signal input from the oscillator of the control unit 10. The drive circuit 21 supplies the generated intermittent drive current to the light source 23. Thus, the drive circuit 21 functions as a current supply source for the light source 23. Specifically, based on the two kinds of pulse signals input from the oscillator of the control unit 10, the drive circuit 21 supplies, to the light source 23, two kinds of drive currents each having a current value and a supply time, at least one of which is different from that of the other drive current.

The drive circuit 22 generates a drive current under the control of the control unit 10. The drive circuit 22 supplies the generated drive current to the mirror 25. Thus, the drive circuit 22 functions as a power source circuit for the mirror 25.

The light source 23 is a laser light source, such as a laser diode. The light source 23 intermittently emits the laser pulse (emission light Le) based on the intermittent drive current supplied from the drive circuit 21. Specifically, based on the two kinds of drive currents supplied from the drive circuit 21, the light source 23 alternately emits two kinds of emission light Le, each having a pulse peak and a pulse width, at least one of which is different from that of the other kind of emission light. The emission light Le is incident on the optical system 24.

The optical system 24 includes a plurality of lenses and optical elements. The optical system 24 may include a beam shaper, a beam splitter, or the like. The optical system 24 arranges on an optical path of the emission light Le from the light source 23. The optical system 24 collimates the emission light Le and guides the collimated light to the mirror 25.

The mirror 25 reflects the emission light Le, guided by the optical system 24, based on the drive current supplied from the drive circuit 22. The mirror 25 includes a reflection surface configured to, for example, rotate or swing around two axes intersecting with each other as centers of rotation or swing. The emission light Le reflected by the mirror 25 is radiated onto the target object TG.

The light reception unit 30 converts light incident on the distance measurement device 1 to a digital signal. The light reception unit 30 transfers to the digital processing unit 40 the converted digital signal as a result of light reception. The light reception unit 30 is used to detect the reflection light Lr that is intermittently incident on the distance measurement device 1. The light reception unit 30 includes, for example, an optical system 31, a photodetector 32, and an analog processing unit 33.

The optical system 31 includes at least one lens. The optical system 31 focuses, onto the photodetector 32, the reflection light Lr incident on the distance measurement device 1.

The photodetector 32 is, for example, a photomultiplier that can be integrated on a semiconductor substrate. The photodetector 32 includes a photoelectron multiplier element using a semiconductor. The photodetector 32 converts the reflection light Lr focused by the optical system 31 into an analog signal by using the photoelectron multiplier element. The analog signal converted by the photodetector 32 is transferred to the analog processing unit 33.

The analog processing unit 33 is an analog front end (AFE). The analog processing unit 33 converts the analog signal transferred from the photodetector 32 into a digital signal. Specifically, the analog processing unit 33 includes, for example, a trans-impedance amplifier (TIA), an analog-to-digital converter (ADC), a time-correlated single photon counter (TCSPC), and the like. The analog processing unit 33 sends the generated digital signal to the digital processing unit 40.

The digital processing unit 40 measures a time at which the light reception unit 30 detected the reflection light Lr based on the digital signal transferred from the light reception unit 30. The digital processing unit 40 measures a distance between the distance measurement device 1 and the target object TG based on a time at which the emission light Le was emitted from the emission unit 20 and the time at which the light reception unit 30 detected the reflection light Lr.

The time at which the emission light Le was emitted from the emission unit 20 is, for example, reported by the control unit 10. A timing of incidence of the reflection light Lr is determined, for example, based on a rising time of a digital signal. Such a method for measuring a distance is also called a time-of-flight (ToF) method.

The digital processing unit 40 sends measured distance-measurement data to an image processing circuit (not shown) on a subsequent stage. The image processing circuit on the subsequent stage generates, based on the distance measurement data, image data in which pieces of distance-measurement data are mapped over a distance measurement target region of the distance measurement device 1. The generated image data is, for example, referred to by a control program of a vehicle or the like on which the distance measurement device 1 is mounted.

With the configuration described above, the distance measurement device 1 can measure the distance from the target object TG.

### 1. 1. 2 Photodetector

Next, a configuration of the photodetector according to the first arrangement will be described. (Planar Layout)

FIG. 2 is a plan view showing an example of a planar layout of the photodetector according to the first arrangement.

As shown in FIG. 2, the photodetector 32 includes, for example, a plurality of pixels PX arranged in a matrix spreading in a row direction and a column direction on a semiconductor substrate. The plurality of pixels PX are arranged so that the position of each pixel can be identified by a column address associated with the column direction and a row address associated with the row direction.

In the example shown in FIG. 2, in the photodetector 32, a pixel PX that is located at an m-th position in the row direction RA and an n-th position in the column direction CA is indicated as a pixel PX <m, n> (0≤m≤M, 0≤n≤N, and M and N are discretionary integers). Hereinafter, for convenience of explanation, it is assumed that a plurality of pixels PX <m> located at an m-th position in the row direction RA correspond to a row address <m>, and a plurality of pixels PX <n> located at an n-th position in the column direction CA correspond to a column address <n>.

Each of the pixels PX includes at least one photoelectron multiplier element. As the photoelectron multiplier element, for example, a single-photon avalanche diode is used. Hereinafter, the single-photon avalanche diode is also called "SPAD". Details of functions of the SPAD will be described later. In a case where the pixel PX includes a plurality of SPADs, the SPADs are arranged, for example, in a matrix spreading in the row direction and the column direction in the pixel PX. The pixel PX including a plurality of SPADs is also called a silicon photon-multiplier element (SiPM).

The number of pixels PX and the number of SPADs included in the photodetector 32 are not limited to those shown in FIG. 2, but may be designed to be any number. The planar shape of each of the pixel PX and the SPAD may not necessarily be square. The shape of each pixel PX can be varied in accordance with the shape and arrangement of the SPADs included in the pixel PX. For example, in each pixel PX, the number of SPADs arranged in the row direction may be different from the number of SPADs arranged in the column direction. The photodetector 32 may utilize pixels PX having different shapes. The shape of the SPAD may be any other shape, for example, rectangular.

### (Pixel)

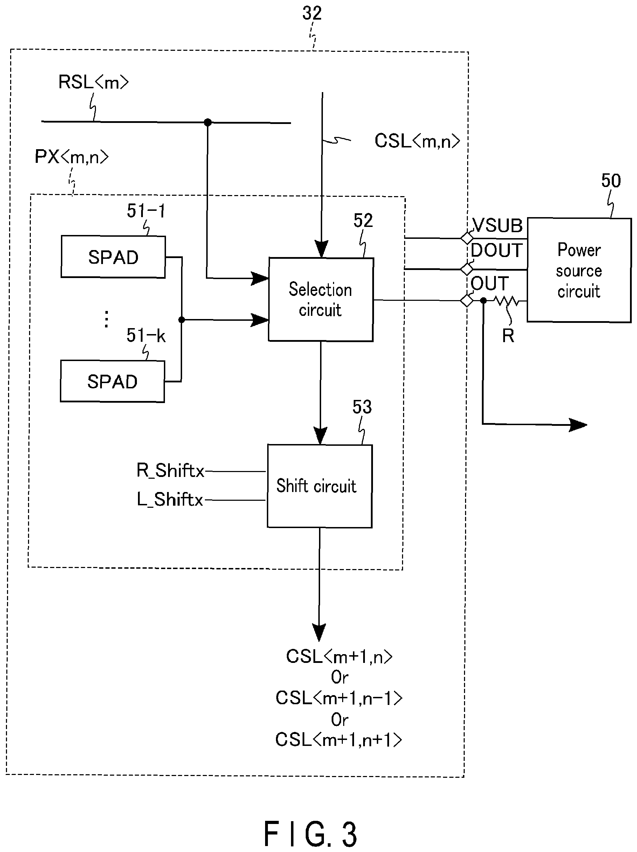

FIG. 3 is a block diagram showing an example of a configuration of the pixel according to the first arrangement.

FIG. 3 shows a configuration corresponding to one pixel PX <m, n> in the photodetector 32. The photodetector 32 includes a row selection line RSL <m> and a column selection line CSL <m, n> as a configuration corresponding to the pixel PX <m, n>. In addition, the photodetector 32 includes terminals VSUB, DOUT, and OUT. The photodetector 32 is coupled to a power source circuit 50 via the terminals VSUB, DOUT, and OUT. A low-impedance element R is coupled between the terminal OUT and the power source circuit 50. The low-impedance element R is, for example, a low-impedance resistor or transistor.

The power source circuit 50 is a circuit that supplies a voltage to drive each pixel PX. The power source circuit 50 supplies a voltage to each pixel PX via the terminals VSUB, OUT, DOUT, and the like. Details of coupling between each pixel PX and the terminals VSUB, OUT, and DOUT will be described later. The power source circuit 50 may be included in the photodetector 32.

The column selection line CSL <m, n> is an interconnect coupled to the pixel PX <m, n>. The column selection line CSL <m, n> transfers a column selection signal to the pixel PX <m, n>. In the photodetector 32, for example, the column selection line CSL is provided for each pixel PX.

The row selection line RSL <m> is an interconnect coupled to a plurality of pixels PX having a common row address <m>. The row selection line RSL <m> transfers a row selection signal to the pixels PX. In the photodetector 32, for example, a plurality of row selection lines RSL are provided to correspond to the number of pixels PX arranged in the row direction RA.

Each pixel PX includes, for example, k SPADs 51 (51-1, ..., 51-k), a selection circuit 52, and a shift circuit 53 (k is an integer equal to or greater than 1). Each of the k SPADs 51 is the smallest unit of elements for use in detection of light. An output of each of the k SPADs 51 is input to the selection circuit 52.

The selection circuit 52 is coupled to the column selection line CSL <m, n> and the row selection line RSL <m>. The selection circuit 52 renders the pixel PX <m, n> to a selected state or a non-selected state based on the input column selection signal and row selection signal. In a case of the selected state, the selection circuit 52 outputs the result of light reception in the pixel PX <m, n> to the analog processing unit 33 via the terminal OUT. In a case of the non-selected state, the selection circuit 52 does not output the result of light reception in the pixel PX <m, n> to the analog processing unit 33. Hereinafter, the pixel PX in the selected state is also called "the selected pixel PX". The pixel PX in the non-selected state is also called "the non-selected pixel PX".

The shift circuit 53 transfers, based on control signals R_Shiftx and L_Shiftx, a column selection signal input to the pixel PX <m, n> to a column selection line CSL <m+1, n> coupled to a pixel PX <m+1, n>, a column selection line CSL <m+1, n-1> coupled to a pixel PX <m+1, n-1>, or a column selection line CSL <m+1, n+1> coupled to a pixel PX <m+1, n+1>.

The control signals R_Shiftx and L_Shiftx are each generated by, for example, the control unit 10. The control signal R_Shiftx is a signal to shift, in a +CA direction, a part of a region formed of at least one selected pixel PX (selected pixel region PSR) of an entire region where the pixels PX are arranged. The control signal L_Shiftx is a signal to shift a part of the selected pixel region PSR in a -CA direction. In the example of FIG. 3, a case is described in which a shift function of the shift circuit 53 is applied to the column selection line CSL; however, the arrangement is not limited to this case. For example, the shift function of the shift circuit may be applied to the row selection line RSL. Moreover, using the photodetector 32 in which two shift circuits are provided for one pixel PX, the shift function of the shift circuits may be applied to both the column selection line CSL and the row selection line RSL.

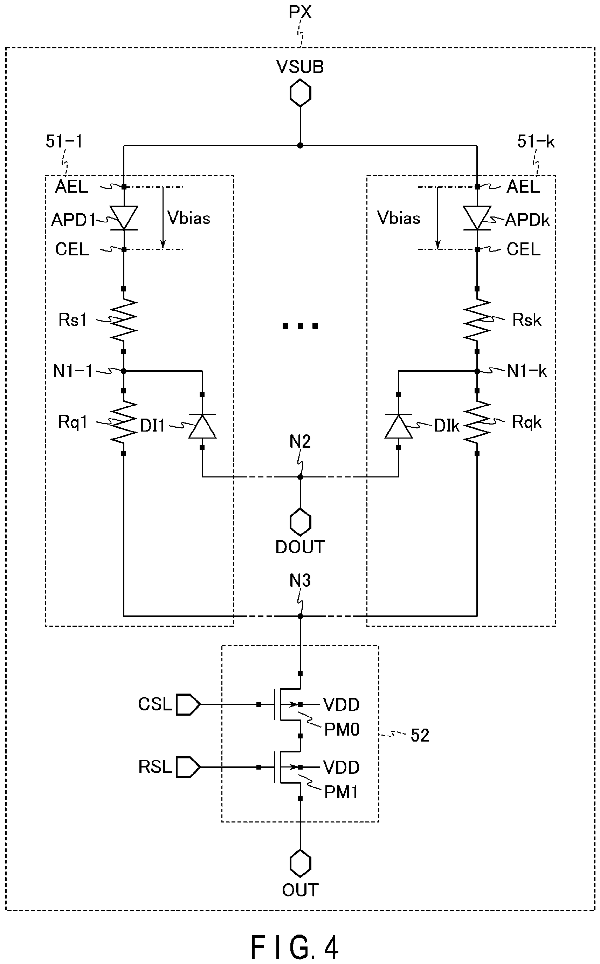

FIG. 4 is a circuit diagram showing an example of the configuration of the pixel according to the first arrangement.

FIG. 4 shows a circuit configuration of k SPADs 51 and the selection circuit 52 of the pixel PX. The k SPADs 51 have the same configuration. FIG. 4 shows a SPAD 51-1 and a SPAD 51-k of the k SPADs 51.

The SPAD 51-1 includes an avalanche photodiode APD1, a protective resistor Rs1, a diode RD1, and a quench resistor Rq1. The SPAD 51-k includes an avalanche photodiode APDk, a protective resistor Rsk, a diode RDk, and a quench resistor Rqk. The selection circuit 52 includes P-type transistors PM0 and PM1.

An anode AEL of the avalanche photodiode APD1 is coupled to the terminal VSUB. A cathode CEL of the avalanche photodiode APD1 is coupled to a first end of the protective resistor Rs1. A second end of the protective resistor Rs1 is coupled to a node N1-1. The diode RD1 is a rectifier diode. A cathode of the diode RD1 is coupled to the node N1-1. An anode of the diode RD1 is coupled to a node N2. A first end of the quench resistor Rq1 is coupled to the node N1-1. A second end of the quench resistor Rq1 is coupled to a node N3.

An anode AEL of the avalanche photodiode APDk is coupled to the terminal VSUB. A cathode CEL of the avalanche photodiode APDk is coupled to a first end of the protective resistor Rsk. A second end of the protective resistor Rsk is coupled to a node N1-k. The diode RDk is a rectifier diode. A cathode of the diode RDk is coupled to the node N1-k. An anode of the diode RDk is coupled to the node N2. A first end of the quench resistor Rqk is coupled to the node N1-k. A second end of the quench resistor Rqk is coupled to the node N3.

Thus, the k SPADs 51-1 through 51-k are coupled in parallel to each of the node N2 and the node N3.

The node N2 is coupled to the terminal DOUT. A voltage supplied to the terminal DOUT is a constant current. The constant voltage supplied to the terminal DOUT is set to, for example, a voltage lower than each of a sum of a voltage at which avalanche breakdown stops in the avalanche photodiode APD1 and a threshold voltage of the diode RD1, ... and a sum of a voltage at which avalanche breakdown stops in the avalanche photodiode APDk and a threshold voltage of the diode RDk.

A source of the P-type transistor PM0 is coupled to the node N3. A voltage VDD is supplied to a body of the P-type transistor PM0. The voltage VDD is a source voltage. The column selection signal is input to a gate of the P-type transistor PM0 from the column selection line CSL. A source of the P-type transistor PM1 is coupled to a drain of the P-type transistor PM0. A voltage VDD is supplied to a body of the P-type transistor PM1. The row selection signal is input to a gate of the P-type transistor PM1 from the row selection line RSL. A drain of the P-type transistor PM1 is coupled to the terminal OUT.

By the configuration described above, in each of the avalanche photodiodes APD1 through APDk in the selected pixel PX, a common electrical potential difference Vbias is applied from the anode AEL to the cathode CEL. The electrical potential difference Vbias is a reverse bias that makes the cathode CEL higher in potential than the anode AEL. The selected pixel PX outputs, from the drain of the P-type transistor PM1, an output signal corresponding to a sum of results of light reception of the avalanche photodiodes APD1 through APDk based on the electrical potential difference Vbias. Thus, the selected pixel PX can function as the smallest output unit of the results of light reception in the photodetector 32. The P-type transistors PM0 and PM1 may be coupled in reverse order. In this case, the selected pixel PX outputs the output signal from the drain of the P-type transistor PM0. In the non-selected pixel PX, carriers are emitted to the terminal DOUT via the diodes RD1, ..., and RDk.

The pixel PX may further include an N-type transistor coupled to the node N3. The N-type transistor of the non-selected pixel PX may be configured to emit the carriers accumulated at the node N3 to a power supply line VSS (not shown). The power supply line VSS is, for example, coupled to the ground. For example, two N-type transistors are coupled in parallel between the node N3 and the power supply line VSS. The column selection line CSL and the row selection line RSL are respectively coupled to the gates of the two N-type transistors. In a case where the pixel PX comes to be in the non-selected state, the voltage of either the column selection line CSL or the row selection line RSL becomes an "H" level. As a result, either one of the two N-type transistors coupled in parallel between the node N3 and the power supply line VSS is turned on. Accordingly, a larger number of carriers unnecessarily accumulated at the node N3 can be emitted to the power supply line VSS as compared to a case in which the two N-type transistors are not coupled to the node N3.

### 1. 1. 3 APD

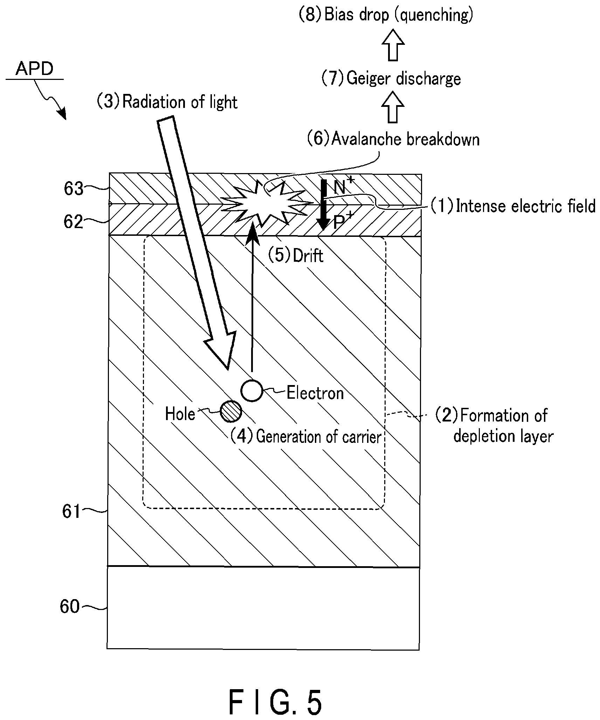

Next, an example of a configuration of the avalanche photodiode APD and an operating principle of the SPAD will be described. FIG. 5 is a schematic diagram showing an example of a structure of the avalanche photodiode and an operating principle of the SPAD according to the first arrangement.

First, a configuration of the avalanche photodiode APD will be described. The avalanche photodiode APD includes, for example, a substrate 60, a p-type semiconductor layer 61, a p⁺-type semiconductor layer 62, and an n⁺-type semiconductor layer 63.

The substrate 60 is, for example, a p-type semiconductor substrate. The p-type semiconductor layer 61, the p⁺-type semiconductor layer 62, and the n⁺-type semiconductor layer 63 are stacked on the substrate 60 in this order. The concentration of a p-type impurity in the p⁺-type semiconductor layer 62 is higher than the concentration of the p-type impurity in the p-type semiconductor layer 61. The n⁺-type semiconductor layer 63 is a semiconductor layer doped with an n-type impurity. For example, an electrode (not shown) is coupled on the n⁺-type semiconductor layer 63.

Next, an operating principle of the SPAD will be described below. In the distance measurement device 1 according to the first arrangement, the substrate 60 side corresponds to a low-potential side of a power source node SUB, and the n⁺-type semiconductor layer 63 side corresponds to a high-potential side (cathode).

In a photodetection operation, a high negative voltage is applied to the anode AEL (that is, the substrate 60 side) in the avalanche photodiode APD. Thus, an electrical potential difference Vbias of a high reverse bias is applied to the avalanche photodiode APD. As a result, an intense electric field is generated across the p⁺-type semiconductor layer 62 and the n⁺-type semiconductor layer 63 (that is, near the PN junction) (FIG. 5 (1)).

Then, a depletion layer is formed from the PN junction toward the substrate 60 (FIG. 5 (2)). As a result, the avalanche photodiode APD is brought to be able to detect an optical signal.

When light is radiated into the avalanche photodiode APD, part of the energy of the light arrives in the depletion layer (FIG. 5 (3)). When the light is radiated into the depletion layer, a pair of an electron and a hole, namely, a carrier, may be generated in the depletion layer (FIG. 5 (4). The carrier generated in the depletion layer drifts due to the electric field generated due to the electrical potential difference Vbias of the reverse bias applied to the avalanche photodiode APD (FIG. 5 (5)). For example, the hole of the generated carrier is accelerated toward the substrate 60 side. On the other hand, the electron of the generated carrier is accelerated toward the PN junction side.

The electron accelerated toward the PN junction side collides with an atom under the intense electric field generated near the PN junction. Then, the electron that has collided with the atom ionizes the atom, and generates a new pair of the electron and a hole. In a case where the electrical potential difference Vbias of the reverse bias applied to the avalanche photodiode APD exceeds the breakdown voltage of the avalanche photodiode APD, the aforementioned generation of a pair of an electron and a hole is repeated. Such a phenomenon is called avalanche breakdown (FIG. 5 (6)).

When the avalanche breakdown occurs, the avalanche photodiode APD discharges electrons (FIG. 5 (7)). Such discharge is called Geiger discharge. When Geiger discharge occurs, a current flows through the cathode CEL to the terminal OUT. As a result, an electrical signal relating to the Geiger discharge and subsequent recovery is output from the avalanche photodiode APD, that is, one SPAD.

The current output from the avalanche photodiode APD flows to, for example, the quench resistor Rq. As a result, a voltage drop occurs at the terminal OUT (FIG. 5 (8)). Such a voltage drop is also called quenching. Due to the quenching, when the electrical potential difference Vbias of the reverse bias applied to the avalanche photodiode APD is lowered below the breakdown voltage, the Geiger discharge is stopped.

Thereafter, charging to capacity at the PN junction of the avalanche photodiode APD is performed, and a recovery current flows. Some time after the Geiger discharge has stopped and then the avalanche phenomenon has ended, the avalanche photodiode APD returns to be able to detect next light.

As described above, the avalanche photodiode APD causes avalanche breakdown in accordance with incident light, and outputs an electrical signal. Accordingly, the photodetector 32 can detect reception of light in units of photons. Hereinafter, a sequence of photodetection operations corresponding to one avalanche breakdown in the avalanche photodiode APD is also called a single "light reception sequence".

The structure of the avalanche photodiode APD is not limited to that shown in FIG. 5. For example, the p⁺-type semiconductor layer 62 may be omitted. Thicknesses of the p-type semiconductor layer 61, the p⁺-type semiconductor layer 62, and the n⁺-type semiconductor layer 63 may be appropriately changed. The PN junction in the avalanche photodiode APD may be formed near the boundary between the substrate 60 and the p-type semiconductor layer 61. In the structure of the avalanche photodiode APD, the p-type semiconductor layer and the n-type semiconductor layer may be reversed.

### 1. 1. 4 Digital Processing Unit

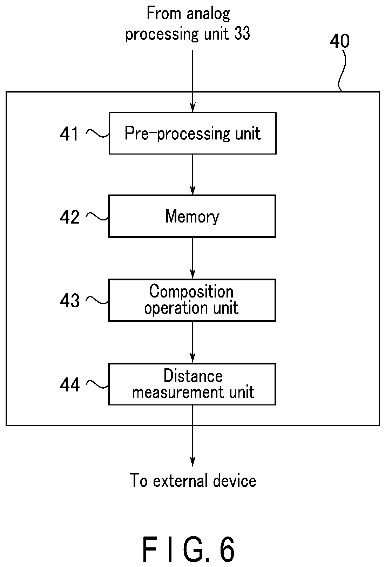

FIG. 6 is a block diagram showing an example of a configuration of the digital processing unit according to the first arrangement.

As shown in FIG. 6, the digital processing unit 40 includes a pre-processing unit 41, a memory 42, a composition operation unit 43, and a distance measurement unit 44.

The pre-processing unit 41 includes, for example, a finite impulse response (FIR) filter and a bit shifter, and performs pre-processing on a digital signal input from the analog processing unit 33. Specifically, the pre-processing unit 41 shapes the digital signal using the FIR filter. The pre-processing unit 41 reduces, using the bit shifter, the number of digits of a value of the signal that has been increased by the FIR filter. Accordingly, the component corresponding to the laser pulse in the digital signal can be shaped, while the amount of memory necessary for storing data is suppressed. The digital signal shaped by the pre-processing unit 41 is stored in the memory 42 as light reception data. The digital signal shaped by the pre-processing unit 41 may not be stored in the memory 42 but may be directly transferred to the composition operation unit 43.

The memory 42 stores the light reception data generated by the pre-processing unit 41 for each pixel PX. The light reception data is stored as time-sequence data associated with, for example, a sampling time in the ADC in the analog processing unit 33. The memory 42 has a data capacity corresponding to at least first and second light reception sequences.

The composition operation unit 43 executes a composition operation based on the light reception data stored in the memory 42. In a case where the light reception data is not stored in the memory 42, the composition operation unit 43 executes a composition operation based on the light reception data transferred from the pre-processing unit 41. In the first arrangement, the composition operation unit 43 generates composition data (addition data) by weighting and adding two pieces of light reception data corresponding to light reception sequences of two consecutive first and second times. That is, the size of the addition data is equal to that of one piece of light reception data corresponding to the light reception sequence of one time. The two pieces of light reception data for use in generating addition data respectively correspond to the two kinds of emission light Le, each having a pulse peak and a pulse width, at least one of which is different from that of the other kind of emission light. The composition operation unit 43 outputs the generated addition data to the distance measurement unit 44. Details of arithmetic processing by the composition operation unit 43 will be described later.

The distance measurement unit 44 measures a distance between the distance measurement device 1 and the target object TG based on a sampling time at a rise of a peak included in the addition data and an emission trigger received from the control unit 10, and generates distance-measurement data. The distance measurement unit 44 sends the generated distance-measurement data to an external image processing circuit.

### 1. 2 Operations

Next, a distance measurement operation in the distance measurement device according to the first arrangement will be described.

In the distance measurement operation by the distance measurement device according to the first arrangement, the light reception unit 30 receives reflection light Lr corresponding to one laser pulse for one light reception sequence. The digital processing unit 40 generates addition data based on two pieces of light reception data received in two consecutive light reception sequences.

### 1. 2. 1 Flowchart

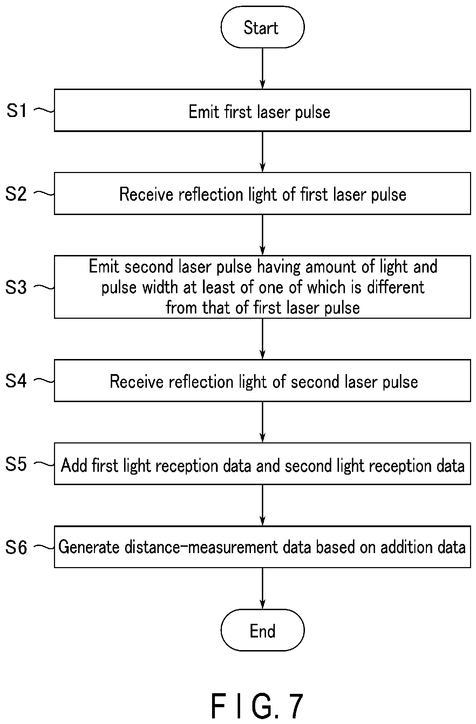

FIG. 7 is a flowchart showing an example of the distance measurement operation in the distance measurement device according to the first arrangement. FIG. 7 shows processing of one cycle from generation of a plurality of laser pulses to generation of one piece of distance-measurement data corresponding to the laser pulses.

Upon starting of the distance measurement operation (Start), the emission unit 20 emits a first laser pulse (emission light Le) (S1).

The light reception unit 30 receives, in a first light reception sequence, reflection light Lr of the first laser pulse emitted in the process of S1 (S2). First light reception data obtained by the process of S2 is stored in a memory region of the memory 42.

After the process of S2, the emission unit 20 emits a second laser pulse having a peak and a pulse width at least one of which is different from that of the first laser pulse emitted in the process of S1 (S3).

The light reception unit 30 receives, in a second light reception sequence subsequent to the first light reception sequence, reflection light Lr of the second laser pulse emitted in the process of S3 (S4). Second light reception data obtained by the process of S4 is stored in a memory region of the memory 42 that is different from the memory region storing the first light reception data. Alternatively, the digital signal shaped by the pre-processing unit 41 may be directly transferred to the composition operation unit 43 without being stored in the memory 42.

The composition operation unit 43 generates addition data by weighting and adding the first light reception data obtained in the process of S2 and the second light reception data obtained in the process of S4 (S5). The composition operation unit 43 may multiply a discretionary amount of weight coefficient to each of the first light reception data and the second light reception data in the addition process. The weight coefficient applied to the first light reception data and the weight coefficient applied to the second light reception data may be either equal or different. The operation processing by the composition operation unit 43 can be executed on, for example, the memory region storing the first light reception data. Since the second light reception data is used for generating addition data in the distance measurement operation of the next cycle, it can be maintained to be stored in the memory 42.

The distance measurement unit 44 generates distance-measurement data based on the addition data obtained in the process of S5 (S6). Specifically, the distance measurement unit 44 generates the distance-measurement data based on a time difference between a time of the emission trigger reported from the control unit 10 and the sampling time at the rise of the peak included in the addition data.

Upon completion of the process of S6, the distance measurement operation is ended (End).

### 1. 2. 2 Waveform Diagram

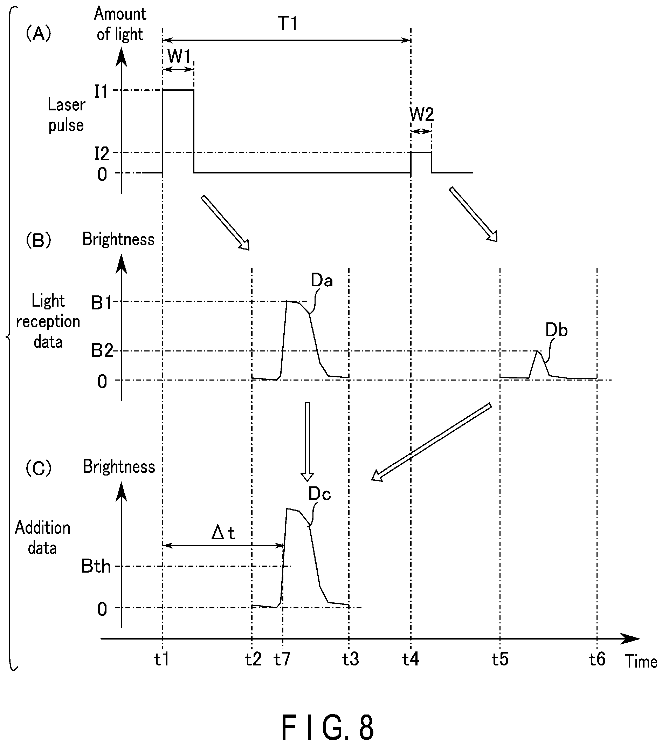

FIG. 8 is a waveform diagram showing an example of various signals relating to the distance measurement operation in the distance measurement device according to the first arrangement. An upper part (A) of FIG. 8 shows the first laser pulse and the second laser pulse respectively corresponding to the processes of S1 and S3 in FIG. 7. A middle part (B) of FIG. 8 shows the first light reception data and the second light reception data respectively corresponding to the processes of S2 and S4 in FIG. 7. A lower part (C) of FIG. 8 shows the addition data generated in the process of S5 in FIG. 7.

The first laser pulse is emitted at a time t1. The first laser pulse has a peak I1 and a pulse width W1.

During a period from a time t2 to a time t3, the light reception unit 30 executes the first light reception sequence corresponding to the first laser pulse. In accordance with the first light reception sequence, first light reception data Da is stored in the memory 42. The brightness of the first light reception data Da has a peak B1.

The second laser pulse is emitted at a time t4. The second laser pulse has a peak I2 and a pulse width W2. At least one of the peak I2 and the pulse width W2 has a value different from that of the peak I1 and the pulse width W1. The pulse width of the laser pulse having a lower peak is smaller than the pulse width of the laser pulse having a higher peak. FIG. 8 shows an example in which the peak I2 of the second laser pulse is lower than the peak I1 of the first laser pulse, and the pulse width W2 of the second laser pulse is smaller than the pulse width W1 of the first laser pulse.

In a case where the distance-measurement possible distance is 300 m, an emission interval T1 from the emission of the first laser pulse to the emission of the second laser pulse is set to 2 µs or more. The control unit 10 is configured to perform a fine adjustment of the emission interval T1 with a temporal resolution shorter than the sampling time (for example, 2.5 ns) in the light reception unit 30.

During a period from a time t4 to a time t5, the light reception unit 30 executes the second light reception sequence corresponding to the second laser pulse. The time of the first light reception sequence (the period from the time t2 to the time t3) and the time of the second light reception sequence (the period from the time t4 to the time t5) are substantially equal. In accordance with the second light reception sequence, second light reception data Db is stored in the memory 42. The brightness of the second light reception data Db has a peak B2. If the peak I2 of the second laser pulse is lower than the peak I1 of the first laser pulse, the peak B2 of the second light reception data Db is lower than the peak B1 of the first light reception data Da. The slew rate of light reception data may vary depending on brightness. Therefore, each of the first light reception data Da and the second light reception data Db is corrected in accordance with the brightness.

Thereafter, the composition operation unit 43 weights and adds the first light reception data Da and the second light reception data Db, and generates addition data Dc.

The distance measurement unit 44 extracts a sampling time t7 when the brightness of the addition data Dc exceeds a threshold value Bth. The distance measurement unit 44 calculates a time difference Δt between the time t7 and the laser pulse rising time t1, thereby generating distance-measurement data.

In the example of FIG. 8, the sampling time of the addition data Dc is associated with the sampling time of the first light reception data Da; however, the arrangement is not limited to this example. For example, the sampling time of the addition data Dc may be associated with the sampling time of the second light reception data Db. In this case, the distance measurement unit 44 calculates the time difference Δt between the time t7 and the laser pulse rising time t4, thereby generating distance-measurement data.

### 1. 3 Advantageous Effects of Present Embodiment

According to the first arrangement, the emission unit 20 emits two kinds of laser pulses, each having a pulse peak and a pulse width, at least one of which is different from that of the other kind of laser pulse. The composition operation unit 43 weights and adds the first light reception data Da corresponding to the first laser pulse and the second light reception data Db corresponding to the second laser pulse. The distance measurement unit 44 measures the distance to the target object TG based on the addition data. As a result, the distance-measurement accuracy can be improved, while the increase in hardware size is suppressed.

Supplementarily, main factors of distance-measurement errors in LiDARs include an error due to insufficiency in temporal resolution and an error depending on the amount of reception light. In order to reduce the error due to insufficiency in temporal resolution, if the light reception data is to be interpolated, the hardware (for example, an ADC, a memory, and a distance-measurement operation unit) necessary for the interpolation processing of the light reception data increases in size. In order to reduce the error depending on the amount of reception light, if a plurality of laser pulses having different energies are emitted and distance measurement is to be performed for each of the laser pulses, the SNR is reduced since a laser pulse of a low energy does not substantially contribute to measurement when a long distance is measured. A countermeasure for one of the aforementioned problems may not be a countermeasure for the other.

In the first arrangement, the distance-measurement operation is performed based on addition data of light reception data of a plurality of times. Accordingly, the increase in hardware size necessary for processing the light reception data can be suppressed, while the interpolation error is reduced. In addition, the energy of the laser pulses can be contributed to substantially all measurement regardless of the measurement distance. Therefore, the first arrangement can contribute to reduction of both the error due to insufficiency in temporal resolution and the error depending on the amount of reception light.

Moreover, if the peak of one of the two kinds of laser pulses, each having a peak and a pulse width, at least one of which is lower than that of the other kind of laser pulse, is lower than the peak of the other laser pulse, the pulse width of the one laser pulse is smaller than that of the other laser pulse. Accordingly, even in a case where the light reception data based on a laser pulse having a low peak greatly affects the distance-measurement accuracy, such as a case of short distance measurement, deterioration of the distance-measurement accuracy can be suppressed.

Furthermore, the emission unit 20 controls the emission interval T1 between emissions of the two kinds of laser pulses with a temporal resolution shorter than the sampling time of the light reception data in the analog processing unit 33. Therefore, the emission interval T1 can be optimized to a value that can reduce the distance-measurement error according to the increase in the amount of reception light.

Supplementarily, interpolation using digital signal processing is known for one of the methods for finer time measurement resolution. For example, an exemplary interpolation method using two laser pulses that are emitted with a difference of half the sampling time is known. Although the exemplary interpolation method can reduce interpolation error, the number of pixels is halved and it requires twice the amount of memory. In the first arrangement, the emission unit 20 controls the emission interval T1 between emissions of the two kinds of laser pulses with a temporal resolution shorter than the sampling time of the light reception data in the analog processing unit 33. Therefore, interpolation error can be reduced to an accuracy close to the exemplary interpolation method without increasing the amount of memory and decreasing the number of pixels.

### 2. Second Embodiment

Next, a distance measurement device according to a second arrangement will be described. The second arrangement differs from the first arrangement in that a plurality of laser pulses are received in the first light reception sequence. In the following description, the configurations and operations different from the first arrangement will be described. Descriptions of configurations and operations similar to those of the first arrangement will be omitted.

### 2. 1 Emission Interval of Laser Pulses

A distance measurement device 1 of the second arrangement is configured to emit a plurality of laser pulses at intervals shorter than a distance-measurement possible distance. Specifically, in a case where the distance-measurement possible distance is, for example, 300 m, the emission interval of the plurality of consecutive laser pulses is set to about 100 ns.

The control unit 10 is configured to perform a fine adjustment of the emission interval with a temporal resolution shorter than the sampling time (for example, 2.5 ns) in the light reception unit 30.

### 2. 2 Composition Operation Unit

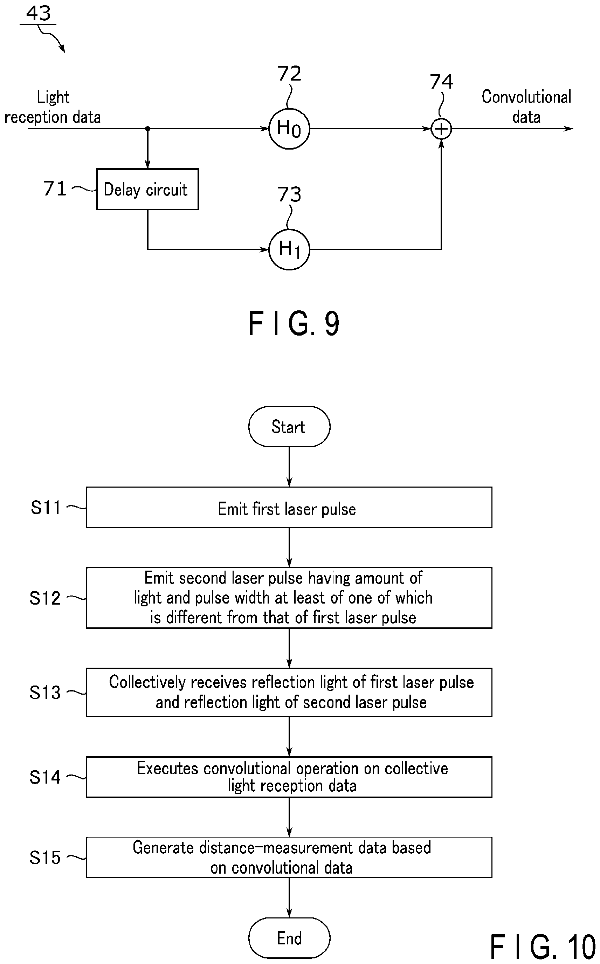

FIG. 9 is a block diagram showing a configuration of the composition operation unit according to the second arrangement.

As shown in FIG. 9, the composition operation unit 43 of the second arrangement includes a FIR filter which receives light reception data as an input and which outputs convolutional data. Specifically, the composition operation unit 43 includes a delay circuit 71, multipliers 72 and 73, and an adder 74.

The delay circuit 71 has an input end to which the light reception data is input, and an output end coupled to an input end of the multiplier 73. The delay circuit 71 has a function of delaying the input data by the emission interval between the first laser pulse and the second laser pulse, and outputting the delayed data. Specifically, in a case where the emission interval is 100 ns and the sampling time is 2.5 ns, the delay circuit 71 is configured to delay the input data by 100/2.5=40 samples and output the delayed data.

The multiplier 72 has an input end to which the light reception data is input, and an output end coupled to a first input end of the adder 74. The multiplier 72 has a function of amplifying or multiplying the input data by a coefficient H0, and outputting the amplified or multiplied data from the output end.

The multiplier 73 has an input end coupled to the output end of the delay circuit 71, and an output end coupled to a second input end of the adder 74. The multiplier 73 has a function of amplifying or multiplying the input data by a coefficient H1, and outputting the amplified or multiplied data from the output end.

That is, the coefficients H0 and H1 are tap coefficients of the FIR filter. The ratio between the coefficients H0 and H1 is set to be, for example, substantially equal to the ratio between the peak I1 of the first laser pulse and the peak I2 of the second laser pulse, but is not limited thereto. The values of the coefficients H0 and H1 may be set independently of each other.

The adder 74 has the first input end which is coupled to the output end of the multiplier 72, the second input end which is coupled to the output end of the multiplier 73, and an output end. The adder 74 outputs convolutional data from the output end.

### 2. 3 Flowchart

FIG. 10 is a flowchart showing an example of the distance measurement operation in the distance measurement device according to the second arrangement. FIG. 10 corresponds to FIG. 7 in the first arrangement.

Upon starting of the distance measurement operation (Start), the emission unit 20 emits a first laser pulse (S11).

Subsequently, the emission unit 20 emits a second laser pulse having a peak and a pulse width at least one of which is different from that of the first laser pulse emitted in the process of S11 (S12).

The light reception unit 30 collectively receives, in one light reception sequence, reflection light Lr of the first laser pulse emitted in the process of S11 and reflection light Lr of the second laser pulse emitted in the process of S12 (S13). The collective light reception data obtained by the process of S13 is stored in the memory 42.

The composition operation unit 43 executes a convolutional operation on the collective light reception data obtained in the process of S13, and generates convolutional data (S14).

The distance measurement unit 44 generates distance-measurement data based on the convolutional data obtained in the process of S14 (S15). Specifically, the distance measurement unit 44 generates the distance-measurement data based on a time difference between a time of the emission trigger reported from the control unit 10 and the sampling time at the rise of the peak included in the convolutional data.

Upon completion of the process of S15, the distance measurement operation is ended (End).

### 2. 4 Waveform Diagram

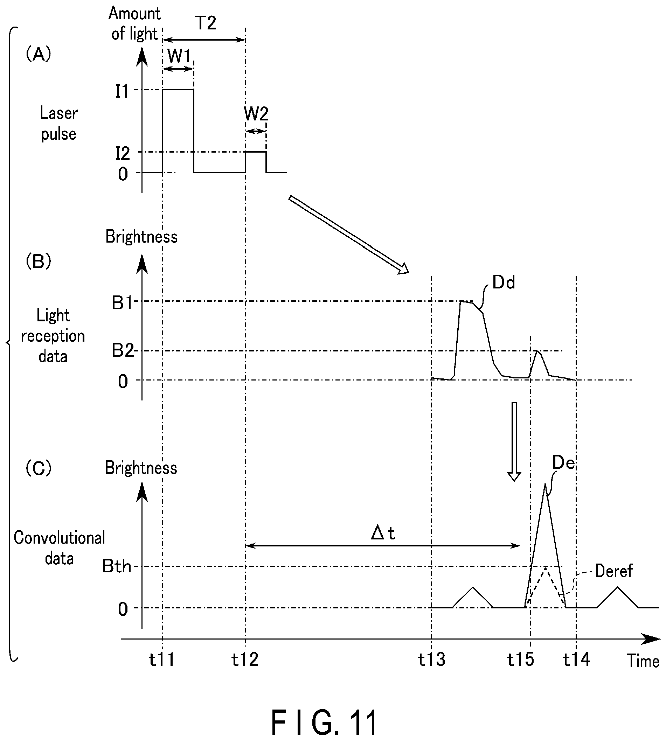

FIG. 11 is a waveform diagram showing an example of various signals relating to the distance measurement operation in the distance measurement device according to the second arrangement. FIG. 11 corresponds to FIG. 8 in the first arrangement. An upper part (A) of FIG. 11 shows the first laser pulse and the second laser pulse respectively corresponding to the processes of S11 and S12 in FIG. 10. A middle part (B) of FIG. 11 shows the collective light reception data corresponding to the process of S13 in FIG. 10. A lower part (C) of FIG. 11 shows the convolutional data generated in the process of S14 in FIG. 10.

The first laser pulse is emitted at a time t11. The first laser pulse has a peak I1 and a pulse width W1.

The second laser pulse is emitted at a time t12. The second laser pulse has a peak I2 and a pulse width W2. The relation of the peaks I1 and I2 to the pulse widths W1 and W2 are the same as that in the first arrangement. FIG. 11 shows an example in which the peak I2 of the second laser pulse is lower than the peak I1 of the first laser pulse, and the pulse width W2 of the second laser pulse is smaller than the pulse width W1 of the first laser pulse.

An emission interval T2 between the emission of the first laser pulse and the emission of the second laser pulse is set to , for example, 30 ns or more and 300 ns or less. The control unit 10 is configured to perform a fine adjustment of the emission interval T2 with a temporal resolution shorter than the sampling time (for example, 2.5 ns) in the light reception unit 30.

During a period from a time t13 to a time t14, the light reception unit 30 executes a collective light reception sequence to collectively receive the first laser pulse and the second laser pulse. In accordance with the collective light reception sequence, collective light reception data Dd is stored in the memory 42. The brightness of the collective light reception data Dd has a peak B1 corresponding to the first laser pulse and a peak B2 corresponding to the second laser pulse. In a case where the peak I2 of the second laser pulse is lower than the peak I1 of the first laser pulse, the peak B2 of a portion corresponding to the second laser pulse of the collective light reception data Dd is lower than the peak B1 of a portion corresponding to the first laser pulse. The slew rate of light reception data may vary depending on brightness. Therefore, each of the portion corresponding to the first laser pulse of the collective light reception data Dd and the portion corresponding to the second laser pulse is corrected in accordance with the brightness.

Thereafter, the composition operation unit 43 executes a convolutional operation on the collective light reception data Dd using the coefficients H0 and H1, and generates convolutional data De.

As described above, the delay time of the delay circuit 71 in the composition operation unit 43 is set to be substantially equal to the emission interval T2. Accordingly, the convolutional data De has three peaks at (1) a sampling time corresponding to the first laser pulse, (2) a sampling time corresponding to the second laser pulse, and (3) a sampling time symmetric to the sampling time corresponding to the first laser pulse with respect to the sampling time corresponding to the second laser pulse. Here, if the ratio between the coefficient H0 of the multiplier 72 and the coefficient H1 of the multiplier 73 in the composition operation unit 43 is set to be substantially equal to the ratio between the peak I1 and the peak I2 (for example, 10:1), the peak corresponding to the second laser pulse is the highest of the three peaks. Note that, in a case where the peak I1 is equal to the peak I2, the ratio between the coefficient H0 of the multiplier 72 and the coefficient H1 of the multiplier 73 in the composition operation unit 43 is set to be 1:1. In this case, as shown in the dashed line Deref in FIG. 11, it is difficult to determine which of the three peaks of the convolutional data is the highest.

The distance measurement unit 44 extracts a sampling time t15 when the brightness of the highest peak of the convolutional data exceeds a threshold value Bth. The distance measurement unit 44 calculates a time difference Δt between the time t15 and the laser pulse rising time t12, thereby generating distance-measurement data.

### 2. 3 Advantageous Effects of Present Embodiment

According to the second arrangement, the emission unit 20 is configured to collectively generate, as collective light reception data, the light reception data corresponding to the first laser pulse and the light reception data corresponding to the second laser pulse. Accordingly, the distance measurement unit 44 can generate distance-measurement data based on the collective light reception data generated in one light reception sequence. Therefore, the time required for generating distance-measurement data can be reduced as compared to a case where distance-measurement data is generated based on two pieces of light reception data generated in two light reception sequences.

In addition, the composition operation unit 43 includes the FIR filter, and executes a convolutional operation on the collective light reception data. The convolutional operation is executed based on the emission interval T2 between the emission of the first laser pulse and the emission of the second laser pulse. Accordingly, the composition operation unit 43 can generate convolutional data having the highest peak at the sampling time that corresponds to one of the portion corresponding to the first laser pulse and the portion corresponding to the second laser pulse in the collective light reception data. Therefore, distance measurement using laser pulses of the first and second times can be performed without deterioration of the SNR, so that the distance-measurement accuracy can be improved.

### 3. Modifications, etc.

In the first arrangement, a case is described in which the first light reception data and the second light reception data are respectively stored in different memory regions in the memory 42, and are thereafter added with predetermined weight coefficients in the composition operation unit 43. However, the arrangement is not limited to this case. For example, the first light reception data and the second light reception data may be first multiplied by the predetermined weight coefficients, respectively, and may thereafter be added and stored in the same memory region in the memory 42. In this case, the hardware size of the memory 42 can be further reduced.

In the first and second arrangements, a case is described in which the peak I1 of the first laser pulse is higher than the peak I2 of the second laser pulse. However, the arrangement is not limited to this case. For example, the peak I1 of the first laser pulse may be lower than the peak I2 of the second laser pulse. In this case, the pulse width W1 of the first laser pulse is smaller than the pulse width W2 of the second laser pulse.

For example, if the distance to a distance-measurement target is short, the brightness of reflection light corresponding to a laser pulse having a high peak is increased. Accordingly, the output current time at light reception may be excessively increased. Therefore, particularly in the second arrangement in which the emission interval T2 is relatively short, if the peak I1 of the first laser pulse is higher than the peak I2 of the second laser pulse, the output current time corresponding to the first laser pulse may interfere with the output current corresponding to the second laser pulse. To suppress the increase in the output current time corresponding to the first laser pulse, setting the peak I1 of the first laser pulse to be lower than the peak I2 of the second laser pulse may be considered.

Furthermore, in the first and second arrangements, a case is described in which a piece of distance-measurement data is generated based on two laser pulses. However, the arrangement is not limited to this case. For example, a piece of distance-measurement data may be generated based on three laser pulses.

Some or all of the above arrangements may be described as the following clauses, but are not limited to the following.

Clause 1. A distance measurement device comprising:
an emission unit configured to emit pulse light;
a photodetector configured to detect reflection light of the pulse light from a target object;
an analog processing unit configured to generate light reception data based on the detected reflection light; and
a digital processing unit configured to measure a distance to the target object based on the light reception data,
the emission unit being configured to emit first pulse light and second pulse light in this order, the second pulse light having a peak and a pulse width at least one of which is different from that of the first pulse light,
the digital processing unit being configured to:
   add first light reception data corresponding to the first pulse light and second light reception data corresponding to the second pulse light; and
   measure the distance based on the added data.

Clause 2. The distance measurement device according to clause 1, wherein in a case where a first peak of the first pulse light is higher than a second peak of the second pulse light, a first pulse width of the first pulse light is larger than a second pulse width of the second pulse light.

Clause 3. The distance measurement device according to clause 1, wherein the emission unit is configured to emit the second pulse light after the first light reception data is generated.

Clause 4. The distance measurement device according to clause 3, wherein the digital processing unit is configured to:
perform a weight and add operation on the first light reception data and the second light reception data; and
measure the distance based on the weighted and added data.

Clause 5. The distance measurement device according to clause 4, wherein in the weight and add operation, a first coefficient corresponding to the first light reception data is independent of a second coefficient corresponding to the second light reception data.

Clause 6. The distance measurement device according to clause 1, wherein the analog processing unit is configured to collectively generate the first light reception data and the second light reception data.

Clause 7. The distance measurement device according to clause 6, wherein the digital processing unit is configured to:
include a finite impulse response (FIR) filter;
input the first light reception data and the second light reception data into the FIR filter to execute a convolutional operation; and
measure the distance based on data as a result of the convolutional operation.

Clause 8. The distance measurement device according to clause 7, wherein the digital processing unit is configured to execute the convolutional operation based on an emission interval between the first pulse light and the second pulse light.

Clause 9. The distance measurement device according to clause 7, wherein the FIR filter has a third coefficient and a fourth coefficient independent of each other.

Clause 10. The distance measurement device according to clause 6, wherein a first peak of the first pulse light is lower than a second peak of the second pulse light.

Clause 11. The distance measurement device according to clause 1, further comprising a control unit configured to adjust an emission interval between the first pulse light and the second pulse light in the emission unit with a temporal resolution shorter than a sampling time of the light reception data in the analog processing unit.

Clause 12. The distance measurement device according to clause 1, wherein the analog processing unit includes an analog-to-digital converter (ADC) or a time-correlated single photon counter (TCSPC).

While certain arrangements have been described, these arrangements have been presented by way of example only, and are not intended to limit the scope of the claims. Indeed, the devices described herein may be embodied in a variety of other forms; furthermore, various omissions, substitutions and changes in the form of the devices described herein may be made.

## Claims

1. A distance measurement device (1) comprising:
an emission unit (20) configured to emit pulse light;
a photodetector (32) configured to detect reflection light of the pulse light from a target object (TG);
an analog processing unit (33) configured to generate light reception data based on the detected reflection light; and
a digital processing unit (40) configured to measure a distance to the target object based on the light reception data,
the emission unit being configured to emit first pulse light and second pulse light in this order, the second pulse light having a peak and a pulse width at least one of which is different from that of the first pulse light,
the digital processing unit being configured to:
add first light reception data corresponding to the first pulse light and second light reception data corresponding to the second pulse light; and
measure the distance based on the added data.

2. The distance measurement device according to claim 1, wherein in a case where a first peak (I1) of the first pulse light is higher than a second peak (I2) of the second pulse light, a first pulse width (W1) of the first pulse light is larger than a second pulse width (W2) of the second pulse light.

3. The distance measurement device according to claim 1, wherein the emission unit is configured to emit the second pulse light after the first light reception data is generated.

4. The distance measurement device according to claim 3, wherein the digital processing unit is configured to:
perform a weight and add operation on the first light reception data and the second light reception data; and
measure the distance based on the weighted and added data.

5. The distance measurement device according to claim 4, wherein in the weight and add operation, a first coefficient corresponding to the first light reception data is independent of a second coefficient corresponding to the second light reception data.

6. The distance measurement device according to claim 1, wherein the analog processing unit is configured to collectively generate the first light reception data and the second light reception data.

7. The distance measurement device according to claim 6, wherein the digital processing unit is configured to:
include a finite impulse response (FIR) filter;
input the first light reception data and the second light reception data into the FIR filter to execute a convolutional operation; and
measure the distance based on data as a result of the convolutional operation.

8. The distance measurement device according to claim 7, wherein the digital processing unit is configured to execute the convolutional operation based on an emission interval between the first pulse light and the second pulse light.

9. The distance measurement device according to claim 7, wherein the FIR filter has a third coefficient and a fourth coefficient independent of each other.

10. The distance measurement device according to claim 6, wherein a first peak of the first pulse light is lower than a second peak of the second pulse light.

11. The distance measurement device according to claim 1, further comprising a control unit (10) configured to adjust an emission interval between the first pulse light and the second pulse light in the emission unit with a temporal resolution shorter than a sampling time of the light reception data in the analog processing unit.

12. The distance measurement device according to claim 1, wherein the analog processing unit includes an analog-to-digital converter (ADC) or a time-correlated single photon counter (TCSPC).
